# EUROPÄISCHE PATENTSCHRIFT

(11) **EP 3 097 387 B1**
(45) Veröffentlichungstag und Bekanntmachung des Hinweises auf die Patenterteilung: **28.11.2018**
(21) Anmeldenummer: 15700882.2
(22) Anmeldetag: 22.01.2015
(51) Int. Cl.: G01D 3/08, G01D 21/00, H02M 3/156

(54) **SIGNALTRENNER**
SIGNAL SEPARATOR
SEPARATEUR DU SIGNAL

(30) Priorität: 22.01.2014 DE 102014100693
(43) Veröffentlichungstag der Anmeldung: 30.11.2016
(73) Patentinhaber: Phoenix Contact GmbH & Co. KG, 32825 Blomberg (DE)
(72) Erfinder: MEIER, Heinz-W., 32689 Kalletal (DE)
(74) Vertreter: Blumbach · Zinngrebe Patent- und Rechtsanwälte
(86) Internationale Anmeldenummer: PCT/EP2015/051216
(87) Internationale Veröffentlichungsnummer: WO 2015/110512

(56) Entgegenhaltungen:
- WO-A1-2008/007308
- DE-A1-102007 006 503
- DE-A1-102010 061 433
- KR-A- 20110 077 678
- US-A- 5 867 048
- US-A1- 2005 088 159
- US-A1- 2005 162 223
- US-A1- 2012 139 507

## Beschreibung

Die Erfindung betrifft einen Signaltrenner, welcher eine Eingangsstufe aufweist, die dazu ausgebildet ist, ein einem Messsignal entsprechendes Eingangsmesssignal einer der Eingangsstufe nachgeschalteten Ausgangsschaltung zuzuführen. Die Ausgangsschaltung enthält einen Linearregler und ist dazu ausgebildet an ihrem Ausgang ein dem Eingangsmesssignal entsprechendes Ausgangsmesssignal bereitzustellen.

Signaltrenner für Eingangsmessströme von beispielsweise 0 bzw. 4 mA bis 20 mA oder für Eingangsmessspannungen von beispielsweise 0 bis 1 Volt sind bekannt.

Ein Signaltrenner, dessen Verlustleistung reduziert werden soll, ist aus der DE 10 2007 006 503 A1 bekannt. Dieser Signaltrenner weist einen Eingang für einen Messstrom auf. Dem Eingang ist ein potential getrennter Gleichstromübertrager nachgeschaltet, welcher den Messstrom zu einer Ausgangsschaltung überträgt. Die Ausgangsschaltung weist einen Linearregler auf, der einen Operationsverstärker und einen Ausgangstransistor enthält und als Spannungs-Strom-Wandler arbeitet. In dem Ausgangsstromkreis des Linearreglers liegen die Ausgangsklemmen des Signaltrenners, an denen eine Bürde angeschlossen werden kann. Die Ausgangsschaltung enthält ferner einen Schaltregler, der zwischen den Ausgangsklemmen angeordnet ist. Schaltregler und Linearregler sind als separate Funktionseinheiten ausgebildet. Der Schaltregler empfängt vom Linearregler ein Regelsignal, welches den Schaltregler derart regelt, dass die Ausgangsspannung des Linearreglers minimiert ist.

Aus der DE 10 2010 061 433 A1 ist ebenfalls ein Signaltrenner bekannt, der als Eingangsstufe einen Wechselrichter, einen Übertrager und einen Gleichrichter aufweist, über den ein Mess-Eingangsstrom einem Linearregler zugeführt wird. Der Linearregler besteht aus einem Operationsverstärker und einem Ausgangstransistor, an den eine Bürde angeschaltet werden kann. Um die Verlustleistung des Ausgangstransistors zu reduzieren, weist der bekannte Signaltrenner eine als Schaltnetzteil ausgebildete Regelungseinrichtung auf, die eine Hilfsspannung so regelt, dass die Verlustleistung des Ausgangstransistors des Linearreglers im Wesentlichen unabhängig von einer im Betriebszustand angeschlossenen Bürde ist. Linearregler und Schaltnetzteil bilden separate Funktionseinheiten.

Der Erfindung liegt die Aufgabe zugrunde, einen Signaltrenner zu schaffen, dessen Schaltungsaufwand gegenüber den bekannten Signaltrennern deutlich reduziert ist, so dass die Verlustleistung einer Signalausgangsstufe des Signaltrenners weiter reduziert werden kann.

Ein Kerngedanke der Erfindung kann darin gesehen werden, dass ein Schaltregler unmittelbar in einem Linearregler integriert ist. Dadurch kann der Ausgangstransistor eines Linearreglers entfallen, so dass sich die Verlustleistung des Signaltrenners zumindest um den Teil, den der Ausgangstransistor benötigen würde, reduziert wird.

Ein weiterer Gesichtspunkt der Erfindung kann darin gesehen werden, dass der Operationsverstärker eines Linearreglers nicht mehr, wie üblich, einen Ausgangstransistor des Linearreglers, sondern direkt den Schaltregler regelt.

Ein weiterer Gesichtspunkt der Erfindung kann darin gesehen werden, dass der Ausgang des Schaltreglers unmittelbar ein analoges Ausgangsmesssignal liefert.

Das oben genannte technische Problem wird mit den Merkmalen des Anspruchs 1 gelöst.

Danach ist ein Signaltrenner vorgesehen, welcher eine Eingangsstufe aufweist, die dazu ausgebildet ist, ein einem Messsignal entsprechendes Eingangsmesssignal einer der Eingangsstufe nachgeschalteten Ausgangsschaltung zuzuführen. Die Ausgangsschaltung enthält einen Linearregler und ist dazu ausgebildet, an ihrem Ausgang einen in dem Eingangsmesssignal entsprechendes Ausgangsmesssignal bereitzustellen. Der Linearregler weist einen Operationsverstärker und einen Schaltregler auf. Ein Eingang des Schaltreglers ist mit einem Ausgang des Operationsverstärkers verbunden, während ein Ausgang des Schaltreglers auf einen ersten Eingang des Operationsverstärkers rückgekoppelt ist. Der Operationsverstärker regelt den Schaltregler derart, dass der Schaltregler an seinem Ausgang ein Ausgangsmesssignal für eine Bürde bereitstellt, welches dem Eingangsmesssignal entspricht.

Angemerkt sei, dass es sich bei den Messsignalen um analoge Messströme, beispielsweise im Bereich von 0 bzw. 4 bis 20 mA, oder um analoge Messspannungen beispielsweise im Bereich von 0 bis 1 Volt handeln kann. Die Eingangsstufe kann in an sich bekannter Weise einen als Zerhacker ausgebildeten Wechselrichter, einen Transformator und einen dem Transformator nachgeschalteten Gleichrichter enthalten.

Dabei ist der Ausgang des Schaltreglers über die Bürde oder ein Rückkopplungsnetzwerk, beispielsweise einem passiven Widerstandsnetzwerk, mit dem ersten Eingang des Operationsverstärkers verbunden. Auf diese Weise regelt der Operationsverstärker den Schaltregler derart, dass am Ausgang des Schaltreglers ein Ausgangsmesssignal für eine Bürde bereitgestellt wird, welches in vorbestimmter Weise dem Eingangsmesssignal entspricht. In vorbestimmter Weise bedeutet, dass das Ausgangsmesssignal dem Eingangsmesssignal multipliziert mit einer definierten Verstärkung entspricht.

Das Merkmal, dass das Messsignal dem Eingangsmesssignal entspricht, umfasst somit Fälle, bei denen die Größe des Ausgangsmesssignals genau bzw. im Wesentlichen der Größe des Eingangsmesssignals oder der Größe des Eingangssignals entspricht, die um einen Faktor, der durch das Rückkopplungsnetzwerk definiert ist, verändert wird. Vorteilhafter Weise ist der Linearregler als Strom-Strom-, Spannungs-Spannungs-, Strom-Spannungs- oder Spannungs-Strom-Wandler implementiert.

Bei dem Schaltregler kann es sich zum Beispiel um einen Abwärts-, Aufwärts-, Sperr- oder SEPIC-Wandler handeln.

Die Erfindung wird nachfolgend anhand zweier Ausführungsbeispiele in Verbindung mit den beiliegenden Zeichnungen näher erläutert. Es zeigen:
- Fig. 1: einen beispielhaften Signaltrenner mit einer Ausgangsschaltung, in der die Erfindung verwirklicht ist,
- Fig. 2: einen beispielhaften Signaltrenner mit einer alternativen Ausgangsschaltung, in der die Erfindung verwirklicht ist, und
- Fig. 3: ein detailliertes Blockschaltbild der in Fig. 1 und Fig. 2 symbolisch dargestellten Eingangsstufen.

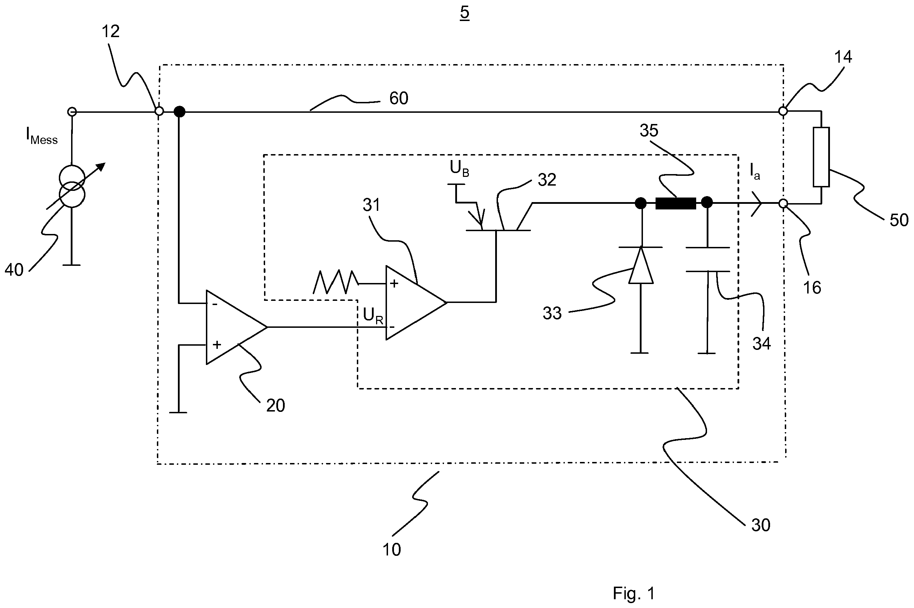

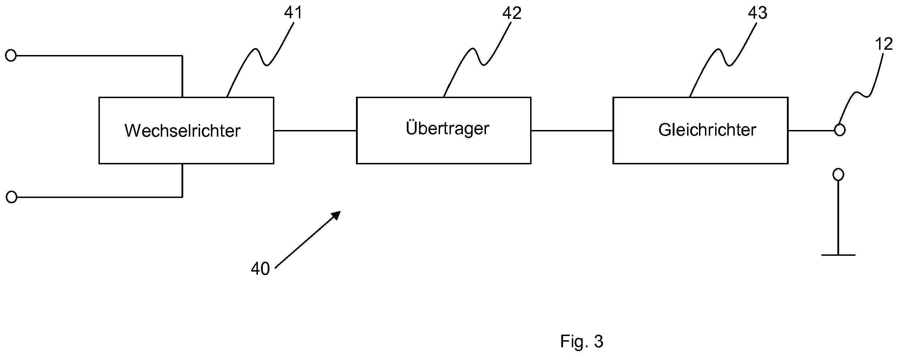

In Figur 1 ist ein beispielhafter Signaltrenner dargestellt. Der Signaltrenner weist eine Eingangsstufe 40 auf, die symbolhaft als gesteuerte Stromquelle dargestellt ist. Die Eingangsstufe 40 kann einen analogen Eingangsmessstrom I_{Mess} als Eingangsmesssignal liefern, dessen Größe beispielsweise von 0 bzw. 4mA bis 20 mA entsprechend einem am Eingang der Eingansstufe 40 anliegenden Messsignal reicht. Die Eingangsstufe 40 kann in an sich bekannter Weise einen als Zerhacker ausgebildeten Wechselrichter 41 aufweisen, der ein analoges konstantes Messsignal in ein Wechselsignal umwandelt, welches anschließend über einen Transformator 42 übertragen und in einem dem Transformator 42 nachgeschalteten Gleichrichter 43 wieder gleichgerichtet und als Eingangsmesssignal bereitgestellt wird. Diese beispielhafte Eingangsstufe 40 ist in Fig. 3 gezeigt.

Angemerkt sei, dass der in Figur 1 mit Iₘₑₛₛ bezeichnete Strom der gesteuerten Stromquelle dem Eingangsmessstrom entspricht, welcher von der Eingangsstufe 40 an einem Eingang 12 einer Ausgangsschaltung 5 bereitgestellt wird. Die Ausgangsschaltung 5 weist beispielsweise lediglich einen Linearregler 10 auf, welcher im gezeigten Ausführungsbeispiel als Strom-Strom-Wandler fungiert. Der Linearregler 30 kann beispielsweise auch als Spannungs-Strom-Wandler implementiert sein.

Der Linearregler 10 weist eingangsseitig einen Operationsverstärker 20 auf, dessen negativer Eingang mit dem Eingang 12 der Ausgangsschaltung 5 verbunden ist. Der positive Eingang des Operationsverstärkers 20 ist mit Masse verbunden. Der Ausgang des Operationsverstärkers 20 ist unmittelbar mit einem Schaltregler 30, der integraler Bestandteil des Linearreglers 10 ist, verbunden.

Der Schaltregler 30 ist beispielhaft als Abwärts-Wandler ausgebildet. Er weist beispielsweise einen Komparator 31 auf, dessen negativer Eingang mit dem Ausgang des Operationsverstärkers 20 verbunden ist. Der Ausgang des Operationsverstärkers 20 liefert somit unmittelbar eine Regelspannung U_{R} für den Schaltregler 30. An den positiven Eingang des Komparators 31 ist beispielsweise eine dreieckförmige oder sägezahnförmige Spannung angelegt. In an sich bekannter Weise liefert der Komparator 31 ein rechteckförmiges Steuersignal an den Basisanschluss eines nachgeschalteten Transistors 32, um in an sich bekannter Weise eine Pulsweitenmodulation auszuführen. An den Emitteranschluss des Transistors 32 liegt eine Betriebsspannung U_{B} an. Der Kollektor des Transistors 32 kann über eine π-Schaltung, welche eine Diode 33, eine Spule 35 und einen Glättungskondensator 34 enthält, mit einem Ausgangsanschluss 16 der Ausgangsschaltung 5 verbunden sein. Demzufolge liefert der Schaltregler 30 des Linearreglers 10 unmittelbar ein Ausgangsmesssignal für eine angeschaltete Bürde 50. Das Ausgangsmesssignal ist bei der gezeigten Ausführungsform ein analoger Ausgangsmessstrom Iₐ, der einem am Eingang 12 bereitgestellten Eingangsmessstrom entspricht. Der Linearregler 10 bzw. die Ausgangsschaltung 5 verfügt über einen weiteren Ausgangsanschluss 14. Die Bürde 50 kann somit an den Ausgangsanschlüssen 14 und 16 angeschlossen sein. Der an den Ausgang 16 gelieferte Ausgangsmessstrom Iₐ des Schaltreglers 30 wird über die Bürde 50 und den Ausgangsanschluss 14 über einen Rückkopplungspfad 60 zum negativen Eingang des Operationsverstärkers 20 rückgekoppelt.

Die Funktionsweise des in Fig. 1 gezeigten Linearreglers 10 wird nachfolgend erläutert.

Der Operationsverstärker 20 liefert an den negativen Eingang des Komparators 31 eine Regelspannung U_{R}, die dafür sorgt, dass der Transistor 32 derart angesteuert wird, dass der Schaltregler 30 einen Ausgangsmessstrom Iₐ am Ausgangsanschluss 16 bereitstellt, der, wenn auf den negativen Eingang des Operationsverstärkers 20 über die Bürde 50 zurückgekoppelt, bewirkt, dass am negativen Eingang des Operationsverstärkers 20 ein Potential von 0V anliegt, so dass zwischen den beiden Eingängen des Operationsverstärkers ein virtueller Kurzschluss erzeugt wird. Mit anderen Worten regelt der Operationsverstärker 20 den Schaltregler 30 derart, dass der Schaltregler 30 am Ausgangsanschluss 16 einen Ausgangsmessstrom Iₐ für die Bürde 50 bereitstellt, der genau oder zumindest im Wesentlichen dem Eingangsmessstrom I_{Mess} entspricht. Der Ausgangsmessstrom liegt im Bereich von 0 bzw. 4mA bis 20 mA, wenn der Eingangsmessstrom im Bereich von 0 bzw. 4 bis 20mA liegt.

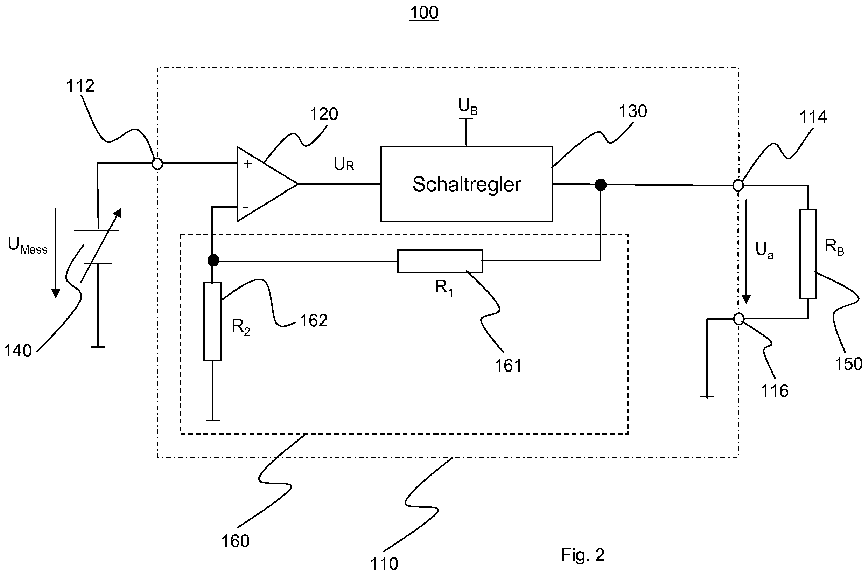

Figur 2 zeigt einen alternativen beispielhaften Signaltrenner. Der Signaltrenner weist eine Eingangsstufe 140 auf, die symbolhaft als gesteuerte Spannungsquelle dargestellt ist. Die Eingangsstufe 140 kann eine analoge Eingangsmessspannung U_{Mess} als Eingangsmesssignal liefern, deren Größe beispielsweise von 0 bis 1V entsprechend einem am Eingang der Eingansstufe 140 anliegenden Messsignal reicht. Die Eingangsstufe 140 kann in an sich bekannter Weise einen als Zerhacker ausgebildeten Wechselrichter aufweisen, der ein analoges Messsignal in ein Wechselsignal umwandelt, welches anschließend über einen Transformator übertragen und in einem dem Transformator nachgeschalteten Gleichrichter wieder gleichgerichtet und als Eingangsmesssignal bereitgestellt wird. Diese beispielhafte Eingangsstufe 140 kann der in Fig. 3 gezeigten Eingangsstufe 40 entsprechen.

Angemerkt sei, dass die in Fig. 2 mit Uₘₑₛₛ bezeichnete Spannung der gesteuerten Spannungsquelle der Eingangsmessspannung entspricht, welche von der Eingangsstufe 140 an einem Eingang 112 einer Ausgangsschaltung 100 bereitgestellt wird. Die Ausgangsschaltung 100 weist beispielsweise lediglich einen Linearregler 110 auf, welcher im gezeigten Ausführungsbeispiel als Spannungs-Spannungs-Wandler fungiert. Der Linearregler 110 kann beispielsweise auch als Strom-Spannungs-Wandler implementiert sein.

Der Linearregler 110 weist eingangsseitig einen Operationsverstärker 120 auf, dessen positiver Eingang mit dem Eingang 112 der Ausgangsschaltung 100 verbunden ist. Folglich ist der positive Eingang des Operationsverstärkers 120 mit der Eingangsstufe 140 verbunden. Der negative Eingang des Operationsverstärkers 120 ist über einen Widerstand R2, der mit 162 bezeichnet ist, mit Masse verbunden. Der Ausgang des Operationsverstärkers 120 ist unmittelbar mit einem Schaltregler 130, der integraler Bestandteil des Linearreglers 110 ist, verbunden. Der Ausgang des Operationsverstärkers 120 liefert somit unmittelbar eine Regelspannung U_{R} für den Schaltregler 130. Der Schaltregler 130 sowie der Operationsverstärker 120 können von einer Betriebsspannungsquelle, die eine Betriebsspannung U_{B} bereitstellt, mit Energie versorgt werden.

Der Widerstand 162 ist Teil eines Rückkopplungsnetzwerkes 160, welches einen weiteren mit 161 bezeichneten Widerstand aufweist. Die Widerstände 161 und 162 bilden einen Spannungsteiler, wobei der gemeinsame Verbindungspunkt der Widerstände 161 und 162 mit dem negativen Eingang des Operationsverstärkers 120 verbunden ist. Der freie Anschluss des Widerstandes 161 ist mit dem Ausgang des Schaltreglers 130 verbunden. Auf diese Weise wird eine am Ausgang des Schaltreglers 130 anliegende konstante Ausgangsmessspannung über das Rückkopplungsnetzwerk 160 zum negativen Eingang des Operationsverstärkers 120 rückgekoppelt. Der Ausgang des Schaltreglers 130, der unmittelbar eine Ausgangsmessspannung Uₐ der Ausgangsschaltung 100 bereitstellt, ist mit einem Ausgangsanschluss 114 der Ausgangsschaltung 100 bzw. des Linearreglers 110 verbunden. Ein zweiter Ausgangsanschluss 116 ist beispielsweise mit Masse verbunden. An die Ausgangsanschlüsse 114 und 116 kann eine Bürde 150 angeschaltet sein, an welcher die Ausgangsmessspannung Uₐ anliegt.

Angemerkt sei an dieser Stelle, dass es sich bei dem Schaltregler 130 beispielsweise um den in Figur 1 gezeigten Abwärts-Wandler handeln kann. Der Schaltregler 130 könnte zum Beispiel auch ein Aufwärts-Wandler, ein Sperr-Wandler oder eine SEPIC-Wandler sein.

Nachfolgend wird die Funktionsweise des in Fig. 2 gezeigten Linearreglers 110 erläutert.

Der Operationsverstärker 120 liefert an den Eingang des Schaltreglers 130 eine Regelspannung U_{R}, die dafür sorgt, dass der Schaltregler 130 ein Ausgangspotential am Ausgangsanschluss 114 bereitstellt, welches, wenn es über das Rückkopplungsnetzwerk 160 auf den negativen Eingang des Operationsverstärkers 20 zurückgekoppelt wird, bewirkt, dass am negativen Eingang des Operationsverstärkers 120 ein Potential anliegt, welches dem von der Eingangsstufe 140 am Eingang 112 bereitgestellten Potential entspricht. Mit anderen Worten regelt der Operationsverstärker 120 den Schaltregler 130 derart, dass der Schaltregler 130 an den Ausgangsanschlüssen 114 und 116 eine Ausgangsmessspannung Uₐ für die Bürde 150 bereitstellt, welche der Eingangsmessspannung U_{Mess} multipliziert mit der Verstärkung (1+R1/R2) der gesteuerten Spannungsquelle entspricht. Angenommen sei, dass die Widerstände beispielsweise derart dimensioniert sind, dass die Werte der Ausgangsmessspannung zwischen 0 und 10V liegen, wenn die gesteuerte Spannungsquelle eine Eingangsmessspannung im Bereich zwischen 0 und 1V liefert.

Dank der Maßnahme, den Schaltregler unmittelbar in dem Linearregler zu integrieren, entfällt der üblicher Weise vorhandene Ausgangstransistor des Linearreglers, so dass sich die Verlustleistung der Signaltrennschaltung zumindest um den Teil, den der Ausgangstransistor benötigen würde, reduziert.

Ferner ermöglicht diese Maßnahme, dass der Operationsverstärker des Linearreglers direkt den Schaltregler regelt, dessen Ausgang dann unmittelbar ein analoges Ausgangsmesssignal liefert, welches einem von der Eingangsstufe gelieferten Eingangsmesssignal entspricht.

## Patentansprüche

1. Signaltrenner umfassend
eine Eingangsstufe (40; 140), die dazu ausgebildet ist, ein einem Messsignal entsprechendes Eingangsmesssignal einer der Eingangsstufe nachgeschalteten Ausgangsschaltung (5; 100), welche einen Linearregler (10; 110) aufweist, zuzuführen, die dazu ausgebildet ist, an ihrem Ausgang ein dem Eingangsmesssignal entsprechendes Ausgangsmesssignal bereitzustellen,
**dadurch gekennzeichnet, dass**
der Linearregler (10; 110) einen Operationsverstärker (20; 120) und einen Schaltregler (30; 130) aufweist, wobei ein Eingang des Schaltreglers (30; 130) mit einem Ausgang des Operationsverstärkers (20; 120) verbunden und ein Ausgang des Schaltreglers (30; 130) auf einen ersten Eingang des Operationsverstärkers (20; 120) rückgekoppelt ist, wobei der Operationsverstärker (20; 120) den Schaltregler (30; 130) derart regelt, dass der Schaltregler (30; 130) an seinem Ausgang ein Ausgangsmesssignal für eine Bürde (50; 150) bereitstellt, welches dem Eingangsmesssignal entspricht, wobei
der Ausgang des Schaltreglers (30) über die Bürde (50) auf den ersten Eingang des Operationsverstärkers (20) rückgekoppelt ist, oder
der Ausgang des Schaltreglers (130) über ein Rückkopplungsnetzwerk (160) mit dem ersten Eingang des Operationsverstärkers (120) verbunden ist.

2. Signaltrenner nach Anspruch 1,
**dadurch gekennzeichnet, dass**
der Linearregler (10; 110) als Strom-Strom- oder Spannungs-Strom-Wandler implementiert ist.

3. Signaltrenner nach Anspruch 1,
**dadurch gekennzeichnet, dass**
der Linearregler (10; 110) als Strom-Spannungs- oder Spannungs-Spannungs-Wandler implementiert ist.

4. Signaltrenner nach einem der vorstehenden Ansprüche, **dadurch gekennzeichnet, dass**
der Schaltregler (30; 130) als Abwärts-, Aufwärts-, Sperr- oder SEPIC-Wandler ausgebildet ist.

## Claims

1. A signal seperator, comprising:
an input stage (40; 140) adapted to provide an input measuring signal corresponding to a measuring signal to an output circuit (5; 100) connected downstream of the input stage, which output circuit comprises a linear regulator (10; 110) and is adapted to provide, at its output, an output measuring signal corresponding to the input measuring signal;
**characterised in that**
the linear regulator (10; 110) comprises an operational amplifier (20; 120) and a switching regulator (30; 130);
wherein an input of the switching regulator (30; 130) is connected to an output of the operational amplifier (20; 120) and an output of the switching regulator (30; 130) is fed back to a first input of the operational amplifier (20; 120);
wherein the operational amplifier (20; 120) controls the switching regulator (30; 130) such that the switching regulator (30; 130) provides at its output an output measuring signal for a burden (50; 150), which corresponds to the input measuring signal;
wherein the output of the switching regulator (130) is fed back to the first input of the operational amplifier (20) via the burden (50); or
wherein the output of the switching regulator (130) is connected to the first input of the operational amplifier (120) via a feedback network (160).

2. The signal seperator according to claim 1,
**characterised in that** the linear regulator (10; 110) is implemented as a current-to-current converter or as a voltage-to-current converter.

3. The signal seperator according to claim 1,
**characterised in that** the linear regulator (10; 110) is implemented as a current-to-voltage converter or as a voltage-to-voltage converter.

4. The signal seperator according to any one of the preceding claims, **characterised in that**
the switching regulator (30; 130) is implemented as one of a step-down converter, step-up converter, flyback converter, or single-ended primary-inductor converter.

## Revendications

1. Séparateur de signaux comprenant :
un étage d'entrée (40 ; 140), qui est conçu pour amener un signal de mesure d'entrée correspondant à un signal de mesure à un circuit de sortie (5 ; 100) qui est monté en aval de l'étage d'entrée et qui présente un régulateur linéaire (10 ; 110), ledit circuit étant conçu pour fournir à sa sortie un signal de mesure de sortie correspondant au signal de mesure d'entrée,
**caractérisé en ce que** :
le régulateur linéaire (10 ; 110) présente un amplificateur opérationnel (20 ; 120) et un régulateur à découpage (30 ; 130),
dans lequel une entrée du régulateur à découpage (30 ; 130) est reliée à une sortie de l'amplificateur opérationnel (20 ; 120) et une sortie du régulateur à découpage (30 ; 130) est couplée par réaction à une première entrée de l'amplificateur opérationnel (20 ; 120), dans lequel l'amplificateur opérationnel (20 ; 120) règle le régulateur à découpage (30 ; 130) de telle sorte que le régulateur à découpage (30 ; 130) fournit à sa sortie un signal de mesure de sortie pour une charge (50 ; 150), lequel correspond au signal de mesure d'entrée, dans lequel
la sortie du régulateur à découpage (30) est couplée par réaction à la première entrée de l'amplificateur opérationnel (20) par l'intermédiaire de la charge (50), ou
la sortie du régulateur à découpage (130) est reliée à la première entrée de l'amplificateur opérationnel (120) par l'intermédiaire d'un réseau de rétroaction (160).

2. Séparateur de signaux selon la revendication 1, **caractérisé en ce que** le régulateur linéaire (10 ; 110) est implémenté sous la forme d'un convertisseur courant-courant ou tension-courant.

3. Séparateur de signaux selon la revendication 1, **caractérisé en ce que** le régulateur linéaire (10 ; 110) est implémenté sous la forme d'un convertisseur courant-tension ou tension-tension.

4. Séparateur de signaux selon l'une quelconque des revendications précédentes, **caractérisé en ce que** le régulateur à découpage (30 ; 130) est réalisé sous la forme d'un convertisseur abaisseur, élévateur, indirect ou SEPIC.
